# EUROPÄISCHE PATENTSCHRIFT

(11) **EP 2 661 606 B1**
(45) Veröffentlichungstag und Bekanntmachung des Hinweises auf die Patenterteilung: **03.12.2014**
(21) Anmeldenummer: 11805052.5
(22) Anmeldetag: 27.12.2011
(51) Int. Cl.: G01D 5/20, G01B 7/14, H02P 31/00

(54) **VERFAHREN UND POSITIONSERFASSUNGSVORRICHTUNG ZUM ERFASSEN EINER POSITION EINES BEWEGLICHEN ELEMENTS EINER ANTRIEBSVORRICHTUNG**
METHOD AND DEVICE FOR DETECTING THE POSITION OF A MOVABLE ELEMENT OF A DRIVE DEVICE
PROCÉDÉ ET DISPOSITIF POUR DÉTECTER LA POSITION D'UN ÉLÉMENT MOBILE D'UN DISPOSITIF D'ENTRAÎNEMENT

(30) Priorität: 17.02.2011 DE 102011004348
(43) Veröffentlichungstag der Anmeldung: 13.11.2013
(73) Patentinhaber: Beckhoff Automation GmbH, 33415 Verl (DE)
(72) Erfinder: PRÜSSMEIER, Uwe, 32657 Lemgo (DE); ACHTERBERG, Jan, 47249 Duisburg (DE); KAULMANN, Tim, 33102 Paderborn (DE); BETTENWORTH, Manuel, 33397 Rietberg (DE); BADE, Jan-Hendrik, 33415 Verl (DE)
(74) Vertreter: Patentanwaltskanzlei WILHELM & BECK
(86) Internationale Anmeldenummer: PCT/EP2011/074079
(87) Internationale Veröffentlichungsnummer: WO 2012/110153

(56) Entgegenhaltungen:
- EP-A1- 1 229 301
- EP-A1- 2 105 713
- DE-A1- 4 311 973
- DE-A1-102007 016 787
- DE-T2- 69 805 871

## Beschreibung

Die Erfindung betrifft ein Verfahren und eine Positionserfassungsvorrichtung zum Erfassen einer Position eines beweglichen Elements einer Antriebsvorrichtung. Die Erfindung betrifft ferner eine Antriebsvorrichtung.

Aus der Patentschrift US 6,781,524 ist ein Positionserfassungssystem für Fahrzeuge bekannt, welche sich auf einer Fahrstrecke bewegen. Das bekannte System umfasst ein magnetisches Element, welches jeweils an den Fahrzeugen angeordnet ist. In der Fahrstrecke sind Sensorspulen angeordnet. Fährt nun ein Fahrzeug mit seinem magnetischen Element über eine solche Sensorspule, so wird in dieser mittels des magnetischen Elements ein magnetischer Fluss erzeugt. Der magnetische Fluss kann dann mittels Messung einer Sensorspulenspannung gemessen werden, so dass eine Anwesenheit des Fahrzeugs über der Sensorspule detektiert werden kann.

Nachteilig hieran ist beispielsweise, dass eine erhebliche Zeit vergeht, bis eine Fahrzeugposition basierend auf der gemessenen Sensorspulenspannung bestimmt werden kann. Das liegt insbesondere darin begründet, dass ein kontinuierliches periodisches Spannungssignal an die Sensorspule gelegt wird, so dass zwecks Positionsbestimmung nur ein kontinuierliches Messsignal zur Verfügung steht, wobei hier die Einhüllende des Messsignals über mehrere Perioden gemessen wird, was erheblich Zeit beansprucht.

Die EP 2 105 713 A1 zeigt ein Positionsmessgerät und ein Verfahren zu dessen Betrieb. Hierbei ist eine Abtastleiterplatte vorgesehen umfassend mehrere Empfängerspulen und mehrere Erregerleiterbahnen, die als mehrere planar-parallele stromdurchflossene Einzel-Leiterbahnen ausgebildet sind. Diese Einzel-Leiterbahnen werden mittels eines gepulsten Erregerstroms gespeist. Hierdurch wird in den Erregerleiterbahnen ein elektromagnetisches Feld generiert, welches in den Empfängerspulen Spannungen induziert, um daraus eine Positionsinformation einer Codescheibe zu ermitteln, welche an einer Welle eines Rotors befestigt ist.

Die DE 10 2007 016 787 A1 zeigt ein Verfahren zur Bestimmung der Ankerlage in einem Elektromagneten, welcher mehrere Erregerspulen umfasst. Ferner ist eine Messwicklung vorgesehen. Wenn die Erregerspulen mittels eines elektrischen Impulses beaufschlagt werden, so ändert sich dadurch eine Lage des Ankers. Diese Bewegung verändert eine Magnetflussverteilung im Elektromagneten, welche in der Messwicklung eine Spannung induziert. Die in der Messwicklung induzierte Spannung kann dann für Auswertungszwecke weiter verwendet werden.

Die DE 43 11 973 A1 zeigt eine magneto-induktive Sensorzeile für eine magnetische Positions- und/oder Wegbestimmung und ein Verfahren hierzu. Hierbei sind mehrere Senderspulen und mehrere Empfängerspulen vorgesehen. Die Senderspulen können beispielsweise mittels sinusförmigen Erregerströmen oder mit Rechteckimpulsen angesteuert werden. Hierdurch werden in den Empfängerspulen Spannungen induziert, wobei eine resultierende induzierte Wechselspannung in den Empfängerspulen von einer Stellung eines Magneten abhängig ist, welcher beweglich über den Spulen angeordnet ist.

Die DE 698 05 871 T2 zeigt einen Längenmessapparat unter Verwendung einer magnetostriktiven Verzögerungsleitung. Hierbei ist eine Antriebsspule vorgesehen, welche mittels einer Antriebspuls-Generatorschaltung angesteuert wird. Diese legt einen vorbestimmten Steuer- bzw. Antriebspuls an die Antriebsspule. Eine Erfassungs- bzw. Detektionsschaltung detektiert dann ein Erfassungs- bzw. Detektionspulssignal als eine induzierte Spannung, welche in einer Empfangsspule erzeugt wird.

Die EP 1 229 301 A1 zeigt ein Sensorsystem zur Positionserfassung eines beweglichen Elements. Hierbei sind eine Primärspule und mehrere Sekundärspulen vorgesehen. Die Primärspule wird mittels eines elektrischen Erregerimpulses gespeist, so dass in den Sekundärspulen eine Spannung induziert wird. Eine Messung der induzierten Spannungen in den Sekundärspulen wird dann für eine Positionsbestimmung des beweglichen Elements verwendet.

Die der Erfindung zugrunde liegende Aufgabe kann daher darin gesehen werden, ein Verfahren zum Erfassen einer Position eines beweglichen Elements einer Antriebsvorrichtung anzugeben, welches die bekannten Nachteile überwindet und eine schnellere Positionserfassung ermöglicht.

Die der Erfindung zugrunde liegende Aufgabe kann ferner darin gesehen werden, eine entsprechende Vorrichtung zum Erfassen einer Position eines beweglichen Elements einer Antriebsvorrichtung anzugeben.

Die der Erfindung zugrunde liegende Aufgabe kann auch darin gesehen werden, eine entsprechende Antriebsvorrichtung mit einem beweglichen Element anzugeben, in welcher eine schnelle Positionserfassung des beweglichen Elements ermöglicht ist.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Erfassen einer Position eines beweglichen Elements einer Antriebsvorrichtung bereitgestellt. Die Vorrichtung zur Erfassung der Position, welche auch als eine Positionserfassungsvorrichtung bezeichnet werden kann, umfasst zumindest eine Erregerspule und zumindest eine der Erregerspule zugeordnete Sekundärspule. Es wird ein elektrischer Erregerimpuls auf die Erregerspule beaufschlagt. Dieser Erregerimpuls induziert dann eine elektrische Spannung in der Sekundärspule. Es wird die Sekundärspulenspannung gemessen, also die elektrische Spannung, welche an der Sekundärspule anliegt. Anschließend wird die Position des beweglichen Elements basierend auf der gemessenen Sekundärspulenspannung bestimmt.

Nach einem weiteren Aspekt der Erfindung wird eine Vorrichtung zum Erfassen einer Position eines beweglichen Elements einer Antriebsvorrichtung bereitgestellt, welche zumindest eine Erregerspule und zumindest eine der Erregerspule zugeordnete Sekundärspule aufweist. Ferner ist ein Impulsgeber vorgesehen, welcher derart gebildet ist, einen elektrischen Erregerimpuls auf die Erregerspule zu beaufschlagen, so dass dadurch eine elektrische Spannung in der Sekundärspule induziert wird. Des Weiteren ist ein Detektor gebildet, welcher die elektrische Spannung in der Sekundärspule, also die Sekundärspulenspannung, messen kann. Eine Vorrichtung zum Erfassen einer Position eines beweglichen Elements einer Antriebsvorrichtung im Sinne der vorliegenden Erfindung kann allgemein auch als eine Positionserfassungsvorrichtung bezeichnet werden.

Gemäß einem anderen Aspekt der Erfindung ist eine Antriebsvorrichtung vorgesehen, welche ein bewegliches Element und eine Positionserfassungsvorrichtung zum Erfassen einer Position des beweglichen Elements gemäß der vorliegenden Erfindung umfasst. Vorzugsweise ist die Positionserfassungsvorrichtung in der Antriebsvorrichtung integriert gebildet. Die Positionserfassungsvorrichtung kann insbesondere auch getrennt von der Antriebsvorrichtung gebildet sein, so dass in vorteilhafter Weise eine Nachrüstung, beispielsweise eine nachträgliche Integration, an einer bestehenden Antriebsvorrichtung möglich ist.

Die Erfindung umfasst also den Gedanken, an eine Erregerspule einen elektrischen Erregerimpuls anzulegen. Das Anlegen kann vorzugsweise das Speisen der Erregerspule mit einer Wechselspannung umfassen. Durch das Anlegen des elektrischen Erregerimpulses wird eine elektrische Spannung in der Sekundärspule induziert. Bewegt sich nun das bewegliche Element über die Sekundärspule, so wird dies einen Maximalwert des zeitlichen Spulenspannungsverlaufs in der Sekundärspule ändern. Diese Änderung, welche sich insbesondere durch eine Messung der induzierten Spulenspannung zeigt, wird zur Bestimmung der Position des beweglichen Elements herangezogen. Wenn sich kein bewegliches Element über die Sekundärspule bewegt, wird die elektromagnetische Kopplung nicht gestört und die induzierten Spulenspannungen heben sich auf, sodass die gemessene Sekundärspulenspannung zu Null wird. Dadurch, dass lediglich ein elektrischer Erregerimpuls auf die Erregerspule beaufschlagt wird, wird auch die induzierte Spulenspannung lediglich eine zeitlich begrenzte Dauer aufweisen. Somit kann in vorteilhafter Weise bereits nach einer sehr kurzen Zeit verglichen mit dem Stand der Technik nach dem Beaufschlagen des Erregerimpulses auf die Erregerspule die Position des beweglichen Elements bestimmt werden. Insbesondere in Bezug zu den bekannten Verfahren, in denen in der Regel eine Einhüllende eines Spannungsmesssignals über mehrer Perioden des Signals gemessen wird, ermöglicht das erfindungsgemäße Verfahren eine viel kürzere Messdauer - es muss eben nicht über mehrere Perioden gemessen werden - , wodurch eine Positionsbestimmung des beweglichen Elements verglichen mit den bekannten Systemen erheblich kürzer dauert.

Nach einer Ausführungsform der Erfindung wird eine Differenzspannung der Sekundärspule gemessen. Eine Spule im Sinne der Erfindung weist insbesondere ein Spulenanfang und ein Spulenende auf, wobei eine Differenzspannung insbesondere zwischen dem Spulenanfang und dem Spulenende gemessen wird. Vorzugsweise umfasst eine Spule, dass heißt eine Erregerspule und/oder eine Sekundärspule, n Wicklungen, wobei n für die Anzahl der Wicklungen steht. In einer weiteren Ausführungsform der Erfindung wird das Spulenende oder der Spulenanfang auf Masse gelegt, wobei dann insbesondere eine Spannung zwischen dem Spulenanfang respektive Spulenende gemessen wird, was einer Differenzspannung der Spule entspricht. Über die gemessene Differenzspannung ist es dann insbesondere ermöglicht, auf die Position des beweglichen Elements zu schließen. Hierbei wird beispielsweise eine mathematische Funktion zur Berechnung der Position basierend auf der gemessenen Differenzspannung verwendet.

Nach einer Ausführungsform der Erfindung weist die Sekundärspule eine sinusförmige oder kosinusförmige Geometrie auf. Insbesondere kann die Sekundärspule auch eine dreiecksförmige Geometrie aufweisen. Eine solche Geometrie bedeutet insbesondere, dass der maximale Wert der induzierten Spannung in der Sekundärspule abgebildet über der Position des beweglichen Elementes einen kosinusförmigen bzw. sinusförmigen oder dreiecksförmigen zeitlichen Verlauf aufweist. Solche Geometrien können insbesondere mittels entsprechender Wicklungsanordnungen realisiert werden. Wenn mehrere Sekundärspulen vorgesehen sind, können diese beispielsweise eine sinus- bzw. kosinusförmige Geometrie aufweisen, welche bevorzugterweise um 90° versetzt zueinander angeordnet sind. Das heißt, dass eine Phasendifferenz der jeweiligen induzierten Sensorspulenspannungen 90° beträgt. Vorzugsweise kann eine solche Phasenverschiebung aber auch verschieden von 90° betragen.

Ein Erregerimpuls in Sinne der Erfindung weist insbesondere eine begrenzte zeitliche Dauer auf. Vorzugsweise liegt die zeitliche Dauer im Mikrosekundenbereich. Vorzugsweise kann eine zeitliche Dauer des elektrischen Erregerimpulses auch kleiner als 1000 µs bzw. kleiner als 100 µs, insbesondere kleiner als 10 µs betragen. Je kürzer der elektrische Erregerimpuls ist, desto kürzer ist auch eine zeitliche Dauer der induzierten Spulenspannung in der Sekundärspule. Weiterhin kann dadurch auch insbesondere in vorteilhafter Weise eine elektromagnetische Störung in einer benachbarten Erregerspule oder Sekundärspule vermieden werden. Dadurch kann eine Positionsbestimmung besonders empfindlich durchgeführt werden.

Gemäß einer bevorzugten Ausführungsform der Erfindung können mehrere elektrische Erregerimpulse auf die Erregerspule beaufschlagt werden. Somit ist es in vorteilhafter Weise ermöglicht, mehrere Positionsmessungen nacheinander durchzuführen. Ein Verfahrweg des beweglichen Elements kann insofern in vorteilhafter Weise verfolgt werden. Allgemein kann ein elektrischer Erregerimpuls auch als ein elektrisch gepulstes Erregersignal bezeichnet werden. Ein zeitlicher Abstand zwischen zwei elektrischen Erregerimpulsen bzw. zwei gepulsten Erregersignalen kann beispielsweise 20 µs betragen. Vorzugsweise werden die elektrischen Erregerimpulse mit einer Wiederholfrequenz von 1 kHz bis 1 MHz beaufschlagt. Eine zeitliche Dauer des Erregerimpulses kann auch insbesondere zwischen 600 ns und 2000 ns liegen, wobei vorzugsweise der Erregerimpuls eine zeitliche Dauer von etwa 600 ns oder etwa 2000 ns aufweist.

Gemäß einer beispielhaften Ausführungsform der Erfindung können auch mehrere, insbesondere zwei, beispielsweise vier, vorzugsweise acht, Sekundärspulen einer Erregerspule zugeordnet sein. Nach einer weiteren Ausführungsform der Erfindung können auch mehrere Erregerspulen, insbesondere zwei, beispielsweise drei, insbesondere vier, Erregerspulen, vorgesehen sein. Insbesondere das Vorsehen von mehreren Sekundärspulen ermöglicht in vorteilhafter Weise eine besonders genaue Positionsbestimmung des beweglichen Elements, da mittels entsprechender mathematischer Auswertung der gemessenen Differenzspannungen die relative Position des beweglichen Elements zu den Sekundärspulen bestimmt werden kann. Wenn mehrere Sekundärspulen vorgesehen sind, kann vorzugsweise eine Differenzspannung bezogen auf eine Sekundärspule gemessen werden. Es kann zusätzlich oder anstelle insbesondere auch eine Differenzspannung zwischen zwei Sekundärspulen gemessen werden. Das heißt insbesondere, dass eine Differenzspannung der einen Sekundärspule und eine Differenzspannung der anderen Sekundärspule gemessen wird, wobei diese beiden gemessenen Differenzspannungen dann über eine mathematische Funktion miteinander verrechnet werden. Basierend auf diesen gemessenen Differenzspannungen kann dann in vorteilhafter Weise die Position des beweglichen Elements der Antriebsvorrichtung bestimmt werden.

Beispielsweise kann eine Differenzspannung bzw. eine Differenz zwischen zwei gemessenen Differenzspannungen etwa 0 V betragen. Dies ist insbesondere der Fall, wenn die elektromagnetischen Felder der Sekundärspulen nicht durch die Anwesenheit des beweglichen Elements gestört werden, was insbesondere der Fall ist, wenn sich das bewegliche Element nicht in der Nähe der Sekundärspulen, beispielsweise über den Sekundärspulen, befindet. Eine Differenzspannung bzw. eine Differenz zwischen zwei gemessenen Differenzspannungen beträgt insbesondere dann nicht 0 V, ist also ungleich 0 V, wenn das bewegliche Element die elektromagnetischen Felder in den Sekundärspulen stört. Eine solche Störung tritt insbesondere dann ein, wenn sich das bewegliche Element in der Nähe der Sekundärspulen befindet, beispielsweise über den Sekundärspulen. Insbesondere kann dann aufgrund der speziellen Spulenanordnung, der Phasenverschiebungen und der Form der Sekundärspulen eine mathematische Funktion zur Berechnung der Position herangezogen werden. Nach einer Ausführungsform der Erfindung können die Sekundärspulen auch paarweise der Erregerspule zugeordnet werden. In diesem Fall wird dann für jedes Sekundärspulenpaar eine Differenzspannung gemessen. Somit ist es in vorteilhafter Weise ermöglicht auch über eine längere Verfahrstrecke des beweglichen Elements seine Position kontinuierlich zu messen.

Eine Position im Sinne der Erfindung kann insbesondere eine Position in einem Koordinatensystem, insbesondere in einem kartesischen Koordinatensystem sein. Eine Position des beweglichen Elements kann also mittels einer X-, einer Y- und einer Z-Koordinate beschrieben werden. Vorzugsweise kann eine Position des beweglichen Elements auch mittels Kugelkoordinaten beschrieben werden.

Gemäß einer bevorzugten Ausführungsform der Erfindung kann bzw. können eine Erregerspule und/oder eine Sekundärspule als eine oder mehrere Leiterbahnen auf einer Platine gebildet werden. Das heißt insbesondere, dass auf einer Platine Leiterbahnen derart gebildet sind, dass diese eine Spule bilden. Eine Platine kann auch als eine Leiterplatte gebildet sein. Eine solche Leiterplatte ist insbesondere ein Träger für elektronische Bauteile. Dadurch, dass die Spulen bevorzugter Weise durch Leiterbahnen auf der Platine realisiert werden, ist ein besonders kompakter Aufbau ermöglicht. Insbesondere ist somit eine besonders einfache elektrische Kontaktierung der Spulen ermöglicht.

Gemäß einer Ausführungsform weist die Erregerspule eine Rechteckform auf, wobei bevorzugter Weise die Sekundärspule in der Rechteckform angeordnet ist. Allgemein kann eine Wicklung der Erregerspule auch als eine Erregerwicklung bezeichnet werden. Allgemein kann eine Wicklung der Sekundärspule auch als eine Sekundärwicklung bezeichnet werden.

Gemäß einer bevorzugten Ausführungsform der Erfindung wird die gemessene Sekundärspulenspannung für eine digitale Weiterverarbeitung abgetastet und digitalisiert. Somit ist in vorteilhafter Weise keine analoge Demodulation über das Erregersignal mehr notwendig. Es können so insbesondere Abtastfrequenzen von einigen kHz, beispielsweise 50 kHz, erreicht werden. Im bekannten Stand der Technik wird das gemessene analoge Spannungssignal für eine Kreuzkorrelation mit dem analogen Erregerspannungssignal verwendet. Erst das analoge Signal, das aus der Kreuzkorrelation resultiert, wird dann digitalisiert. Im Gegensatz dazu werden aber in dieser bevorzugten Ausführungsform der Erfindung die gemessenen Sekundärspulenspannungen direkt digitalisiert und dann weiterverarbeitet, was erheblich schnellere Positionsberechnungen ermöglicht.

Nach einer weiteren bevorzugten Ausführungsform der Erfindung weist der Erregerimpuls eine zeitlich abnehmende Amplitude auf. Somit kann in vorteilhafter Weise vermieden werden, dass in einer weiteren Erregerspule und/oder den dieser weiteren Erregerspule zugeordneten Sekundärspulen, welche insbesondere der Erregerspule benachbart angeordnet sind, auf welche der elektrische Erregerimpuls beaufschlagt wird, zu einem späteren Zeitpunkt wenn in dieser weiteren Spulenanordnung gemessen werden soll, ein Störsignal induziert wird. Bevorzugterweise weist der Erregerimpuls eine zeitlich abklingende Sinusschwingung oder eine zeitlich abklingende Kosinusschwingung auf. Dadurch wird in vorteilhafter Weise bewirkt, dass ein Maximum in dem induzierten Spulenspannungssignal flacher wird. Das heißt, dass um das Maximum, welches ein lokales oder ein globales Maximum sein kann, eine Steigung flacher ist als in anderen Bereichen des Signalverlaufs. Dadurch weist das Spulenspannungssignal auch rechts und links von dem Maximum noch eine ausreichende Amplitude auf, so dass ein Signal zu Rauschverhältnis besonders günstig ist.

In einer anderen bevorzugten Ausführungsform der Erfindung weist die Positionserfassungsvorrichtung zwei benachbart angeordnete Erregerspulen auf, welche jeweils zeitversetzt mit dem Erregerimpuls beaufschlagt werden. Das heißt insbesondere, dass zunächst die eine Erregerspule mit einem Erregerimpuls beaufschlagt wird. Nach einem Zeitversatz bzw. einer zeitlichen Pause wird dann die zweite Erregerspule mit dem gleichen oder einem anderen Erregerimpuls beaufschlagt. Insbesondere können auch mehr als zwei benachbarte Erregerspulen vorgesehen sein, wobei diese dann analog jeweils zeitversetzt mit einem Erregerimpuls beaufschlagt werden können. Dadurch wird in vorteilhafter Weise vermieden, dass ein elektromagnetisches Feld der einen Erregerspule einen Strom in die benachbarte weitere Erregerspule und insbesondere in den der benachbarten Erregerspule zugeordneten Sekundärspulen induziert, was sonst einen wiederkehrenden Positionsfehler erzeugen könnte.

In einer anderen beispielhaften Ausführungsform der Erfindung wird das Beaufschlagen des Erregerimpulses zeitlich mit einem Zeitsignal, insbesondere einem externen Zeitsignal synchronisiert. Mit extern ist hier insbesondere gemeint, dass das Zeitsignal nicht in der Vorrichtung zum Erfassen einer Position des beweglichen Elements der Antriebsvorrichtung erzeugt wird, sondern extern von dieser Vorrichtung, beispielsweise in der Antriebsvorrichtung. Um ein Zeitsignal erzeugen zu können, ist beispielsweise ein Zeitgeber vorgesehen. Dieser Zeitgeber kann beispielsweise in der Antriebsvorrichtung integriert sein und kann in diesem Fall insbesondere als ein externer Zeitgeber bezeichnet werden. Es kann aber auch vorgesehen sein, dass ein interner Zeitgeber vorgesehen ist, welcher in der Vorrichtung zum Erfassen der Position des beweglichen Elements integriert ist. Gemäß einer weiteren Ausführungsform der Erfindung kann der interne Zeitgeber mit dem externen Zeitgeber zeitlich synchronisiert werden. Insbesondere erzeugt der interne Zeitgeber ein internes Zeitsignal, welches insbesondere mit dem externen Zeitsignal synchronisiert werden kann. Der Zeitpunkt des Beaufschlagens des Erregerimpulses wird vorzugsweise mit dem internen Zeitsignal synchronisiert, kann aber auch mit dem externen Zeitsignal synchronisiert werden. Insbesondere kann der Zeitpunkt des Beaufschlagens des Erregerimpulses, wobei dieser Zeitpunkt auch allgemein als ein Startzeitpunkt bezeichnet werden kann, einen zeitlichen Versatz nach dem internen oder externen Zeitsignal aufweisen. Hierbei kann ein entsprechender Zeitversatz bei der Bestimmung der Position, insbesondere beim Abtasten und Digitalisieren der gemessenen Sekundärspulenspannungen, bei ausreichend hohen Abtastfrequenzen vorzugsweise vernachlässigt werden, wobei sich dieser Zeitversatz aber auch vorzugsweise über eine Interpolation herausrechnen lässt.

Gemäß einer beispielhaften Ausführungsform der Erfindung wird eine Messung der gemessenen Sekundärspulenspannungen innerhalb eines vorbestimmten Zeitintervalls durchgeführt. Dieses vorbestimmte Zeitintervall kann auch als ein Zeitfenster bezeichnet werden. Innerhalb dieses Zeitfensters werden also die gemessenen Spulenspannungen insbesondere abgetastet und digitalisiert. Anschließend kann eine Weiterverarbeitung der digitalisierten Daten durchgeführt werden. Vorzugsweise wird relativ zum Zeitpunkt des Beaufschlagens des Erregerimpulses das vorbestimmte Zeitintervall zeitlich verschoben, so dass ein Amplitudenmaximum der induzierten Spulenspannung erfasst werden kann. Hierbei kann das Zeitfenster vorzugsweise in einem Nanosekundenraster verschoben werden. Vorzugsweise ist eine Regelung vorgesehen, welche den Startzeitpunkt der Erzeugung des Erregersignals bzw. des Erregerimpulses derart steuert, dass dieser zu einem definierten Zeitpunkt zum externen Zeitsignal erfolgt. Allgemein kann das externe Zeitsignal auch in einem Steuerungssystem, insbesondere einem übergeordneten Steuerungssystem, erzeugt werden. Ein solches Steuerungssystem kann beispielsweise in der Antriebsvorrichtung integriert sein und eine Antriebsbewegung des beweglichen Elements steuern.

Gemäß einer weiteren bevorzugten Ausführungsform der Erfindung ist der Detektor mit einem Analog-Digital-Wandler (A/D-Wandler) zum Abtasten und Digitalisieren der gemessenen Sekundärspulenspannung verbunden. Der Detektor umfasst vorzugsweise den Analog-Digital-Wandler. Insbesondere kann eine Abtastung der Spulenspannung im Bereich von einigen Nanosekunden erfolgen. Somit wird also in vorteilhafter Weise bewirkt, dass die gemessenen Spulenspannungen für eine digitale Weiterverarbeitung direkt abgetastet und digitalisiert werden können.

In einer anderen bevorzugten Ausführungsform der Erfindung ist zwischen dem Impulsgeber und der Erregerspule ein elektrischer Schwingkreis zum Harmonisieren des Erregerimpulses gebildet. Vorzugsweise umfasst der Impulsgeber den elektrischen Schwingkreis. Ein Harmonisieren bewirkt insbesondere, dass beispielsweise aus einem rechteckigen Erregerimpuls eine Sinusschwingung oder eine Kosinusschwingung wird. Insbesondere kann der elektrische Schwingkreis aus einem Erregerimpuls einen Impuls mit einer zeitlich abklingenden Sinusschwingung bzw. abklingenden Kosinusschwingung erzeugen.

In einer weiteren Ausführungsform der Erfindung weist der Impulsgeber eine logische Schaltung zum Bilden des Erregerimpulses auf. Eine solche logische Schaltung kann vorzugsweise als ein integrierter Schaltkreis gebildet sein. Vorzugsweise ist die logische Schaltung als eine programmierbare logische Schaltung gebildet. Im Englischen wird eine solche programmierbare logische Schaltung auch als ein "Field Programmable Gate Array" (FPGA) oder als eine "programmable logic device (PLD) bezeichnet. Beispielsweise kann die logische Schaltung als eine anwendungsspezifische integrierte Schaltung gebildet sein. Eine solche Schaltung wird im Englischen als "application specific integrated circuit (ASIC)" bezeichnet. Insbesondere kann in der logischen Schaltung, also insbesondere in dem FPGA oder dem ASIC, ein Synchronzähler oder ein Taktgeber bzw. Zeitgeber eingebaut sein. Die logische Schaltung ist vorzugsweise eingerichtet, die gemessenen Sekundärspulenspannungen auszuwerten. Ferner kann die logische Schaltung auch dazu eingerichtet sein, den Erregerimpuls zu erzeugen. Vorzugsweise steuert die logische Schaltung einen Startzeitpunkt des Erregerimpulses. Weiterhin steuert die logische Schaltung insbesondere eine Spulenspannungsmessung an der Sekundärspule. Vorzugsweise wird die Spulenspannung zu dem Zeitpunkt gemessen, wenn das Maximum der Schwingung erreicht ist. Dieser Zeitpunkt bzw. die zeitliche Differenz zum Signal der Erregerwicklung kann auch in einem weiteren Verfahren geregelt werden, um in vorteilhafter Weise zu gewährleisten, dass im Maximum der Schwingung gemessen wird. Somit können in vorteilhafter Weise äußere Einflüsse wie Temperaturschwankungen ausgeglichen werden. Das Vorsehen einer logischen Schaltung weist insbesondere den Vorteil auf, dass verschiedene Funktionalitäten, beispielsweise das Erzeugen des Erregerimpulses, das Messen der Spulenspannungen, das Synchronisieren eines internen Zeitsignals mit einem externen Zeitsignal oder das Bestimmen der Position des beweglichen Elements, kompakt in einer elektronischen Logik bzw. Logikschaltung integriert werden können.

In einer weiteren Ausführungsform der Erfindung weist der Detektor eine weitere logische Schaltung zum Auswerten der gemessenen Sekundärspulenspannungen auf. Es kann also vorgesehen sein, dass der Impulsgeber und der Detektor zwei getrennte logische Schaltungen aufweisen, wobei die logische Schaltung in dem Detektor auch als ein FPGA oder als ein ASIC gebildet sein kann. Es kann aber auch vorzugsweise vorgesehen sein, dass eine einzige logische Schaltung, insbesondere ein FPGA oder ein ASIC, vorgesehen ist, welche entweder in dem Detektor oder in dem Impulsgeber oder extern von beiden gebildet ist und die entsprechenden vorgenannten Funktionalitäten durchführen kann.

In einem bevorzugten Ausführungsbeispiel der Erfindung weist der Impulsgeber einen internen Taktgeber auf. Dieser interne Taktgeber erzeugt vorzugsweise ein internes Taktsignal, was für eine Regelung für den Zeitpunkt des Erzeugens des Erregerimpulses verwendet werden kann. Dieser interne Taktgeber wird vorzugsweise mit einem externen Taktgeber synchronisiert. Das heißt insbesondere, dass ein internes Taktsignal bzw. Zeitsignal mit einem externen Takt- bzw. Zeitsignal zeitlich synchronisiert wird.

Vorzugsweise ist eine sogenannte Delay-Locked Loop (DLL)-Schaltung gebildet. Eine solche DLL-Schaltung ist insbesondere eine elektronische Schaltung mit einem Eingang und einem Ausgang, wobei ein am Eingang anliegendes Signal, insbesondere ein Taktsignal oder ein Zeitsignal, zeitverzögert über den Ausgang ausgegeben wird. Eine solche DLL-Schaltung kann von einem Taktgeber und/oder von der logischen Schaltung umfasst sein, so dass hierüber insbesondere in vorteilhafter Weise definierte Zeitverzögerungen in den Signalabfolgen und/oder Messungen bewirkt werden können.

In einer bevorzugten Ausführungsform der Erfindung umfasst das bewegliche Element zumindest ein elektrisch leitendes Bauteil zum elektromagnetischen Stören des in der Sekundärspule induzierten elektromagnetischen Feldes. Diese Störung ist insbesondere in der gemessenen Sekundärspulenspannung sichtbar, so dass die Anwesenheit des beweglichen Elements im Bereich der Sekundärspule festgestellt werden kann. Falls ein solches Störsignal nicht vorliegt, kann gefolgert werden, dass sich kein bewegliches Element im Bereich der Sekundärspule befindet. Das elektrisch leitende Bauteil kann vorzugsweise als ein Körper, insbesondere ein rechteckiger Körper, gebildet sein. Elektrisch leitend bedeutet insbesondere, dass das Bauteil zumindest teilweise aus einem elektrisch leitenden Material gebildet ist. Vorzugsweise kann das Bauteil auch komplett aus einem elektrisch leitenden Material gebildet sein. Das elektrisch leitende Bauteil ist vorzugsweise als ein Plättchen gebildet. Ein Plättchen im Sinne der Erfindung ist insbesondere ein rechteckiger Körper. Vorzugsweise können auch mehrere elektrisch leitende Bauteile vorgesehen sein, welche insbesondere unterschiedlich oder gleich ausgebildet sein können. Ein Störsignal ist insbesondere abhängig von der Bauform eines elektrisch leitenden Bauteils und/oder von einer Anzahl der elektrisch leitenden Bauteile, so dass diesbezügliche Unterschiede auch zu unterschiedlichen Störsignalen führen, was wiederum zu unterschiedlichen induzierten Spulenspannungen führt. Es kann also einem entsprechenden gemessenen Spulensignal ein konkretes elektrisch leitendes Bauteil zugeordnet werden, wodurch in vorteilhafter Weise eine Identifikation des beweglichen Elements ermöglicht ist.

In einer weiteren beispielhaften Ausführungsform weist die Antriebsvorrichtung einen Linearmotor auf, welcher das bewegliche Element verlagern kann. In einem solchem Fall wird insbesondere eine Linearposition des beweglichen Elements bestimmt. Vorzugsweise ist das bewegliche Element als ein Schlitten gebildet, welcher mittels des Linearmotors verlagert werden kann. Insbesondere sind an dem Schlitten ein oder mehrere elektrisch leitende Bauteile angeordnet.

Vorzugsweise sind mehrere Schlitten vorgesehen, welche mittels des Linearmotors verlagert werden können. Insbesondere können auch mehrere Linearmotoren vorgesehen sein. Die Schlitten können insbesondere jeweils ein elektrisch leitendes Bauteil aufweisen. Hierbei können die elektrisch leitenden Bauteile gleich oder unterschiedlich gebildet sein. Es kann vorzugsweise auch vorgesehen sein, dass ein oder mehrere Schlitten auch jeweils mehrere elektrisch leitende Bauteile aufweisen. Beispielsweise kann ein Schlitten zwei elektrisch leitende Bauteile aufweisen. Aufgrund der unterschiedlichen Störsignale, welche die verschiedenen elektrisch leitenden Bauteile in der Sekundärspule bewirken, ist in vorteilhafter Weise eine Identifikation der einzelnen Schlitten ermöglicht. Die Schlitten weisen insofern eine eigene Kennung auf. Sie können also eindeutig voneinander unterschieden werden. Diese eindeutige Kennung ermöglicht weiterhin insbesondere, dass gezielt Verschleißerscheinungen an den einzelnen Schlitten überwacht werden können.

In einer anderen bevorzugten Ausführungsform sind in der Positionserfassungsvorrichtung zwei Erregerspulen vorgesehen, welche zumindest teilweise überlappend nebeneinander angeordnet sind. Somit können in vorteilhafter Weise größere Wegstrecken erfasst werden. Insbesondere ist es aufgrund einer solchen wechselseitigen Anordnung von Erregerspulen möglich, beliebig lange Wegstrecken zu erfassen. Vorzugsweise können zwei solche benachbart und überlappend nebeneinander angeordnete Erregerspulen in einem Modul integriert werden. Solche Module können dann ganz einfach nebeneinander angeordnet werden, um so beliebig lange Wegstrecken zu erfassen. Eine solche Wegstrecke muss nicht zwangsläufig geradlinig verlaufen, sondern kann beliebige Formen aufweisen. Entsprechend wird dann eine Form der Erreger- bzw. Primärspule und der Sekundärspulen entsprechend geändert, so dass ein Verhältnis zwischen ihnen gleich bleibt. Auf diese Weise können dann insbesondere in vorteilhafter Weise beliebige Geometrien wie Geraden oder verschiedenste Kurven mit unterschiedlichen Kurvenradien erfasst werden. In einem Modul, welches auch als Spulenmodul bezeichnet werden kann, können auch mehr als zwei Erregerspulen mit zugeordneten Sekundärspulen angeordnet werden. Beispielsweise können 3, 4 oder mehr Erregerspulen mit zugeordneten Sekundärspulen in einem Modul vorgesehen sein. Vorzugsweise sind die Erregerspulen zumindest teilweise überlappend nebeneinander angeordnet.

Ein Linearmotor im Sinne der vorliegenden Erfindung umfasst insbesondere mehrere Wegelemente. Jedes Wegelement weist eine bestimmte Anzahl von Spulen auf. Diese Spulen lassen sich vorzugsweise alle getrennt voneinander ansteuern, beispielsweise mittels einer Steuervorrichtung. Auf den beweglichen Elementen, insbesondere auf den Schlitten, ist insbesondere eine oder mehrere Magnetplatten angeordnet, auf der mehrere Magnete abwechselnd in Nord- und Südausrichtung angeordnet sind. Über eine individuelle Bestromung der einzelnen Spulen der Wegelemente wird ein magnetisches Feld erzeugt, so dass sich über das Kreuzprodukt des erzeugten Feldes mit dem Feld der bewegten Dauermagnete auf den beweglichen Elementen eine Vorschubskraft einstellt und der Schlitten bzw. das bewegliche Element in Geschwindigkeit und Position regelbar wird.

Die Bestromung der einzelnen Spulen wird dabei vorzugsweise durch das Steuersystem bzw. das übergeordnete Steuerungssystem vorgegeben, so dass sich in vorteilhafter Weise eine kontinuierliche Bewegung der beweglichen Elemente, insbesondere der Schlitten, ergibt. Die Spulen können dabei zeitlich gesehen immer wieder anderen beweglichen Elementen, insbesondere anderen Schlitten, zugeordnet werden.

Somit lässt sich eine kontaktlose Bewegung von beliebig vielen beweglichen Elementen, insbesondere Schlitten, auf einem gemeinsamen Verfahrweg mit verschiedensten ineinander übergehenden Geometrien, beispielsweise eine Gerade, einen Kreis, einen Bogen oder eine S-Kurve, auch endlos in einem geschlossenen Umlauf realisieren. Ein solch geschlossener Umlauf kann auch als ein geschlossenes System bezeichnet werden. Die beweglichen Elemente, insbesondere die Schlitten, verfügen allgemein insbesondere über keine kabelgestützte Verbindung zu einem festen Weg. Die beweglichen Elemente, insbesondere die Schlitten, sind insofern kabellos auf einem Verfahrweg angeordnet bzw. gebildet. Ein bewegliches Element in einem solchen Linearmotorsystem kann auch als ein passives bewegliches Element, insbesondere als ein passiver Schlitten, bezeichnet werden.

In einer beispielhaften Ausführungsform der Erfindung kann die Positionserfassungsvorrichtung auch drei Erregerspulen aufweisen, welche vorzugsweise in einem Modul angeordnet sind, wobei diesen drei Erregerspulen insbesondere jeweils eine oder mehrere Sekundärspulen zugeordnet sind. Diese drei Erregerspulen sind zumindest teilweise überlappend nebeneinander angeordnet. Insbesondere kann dann vorgesehen sein, dass das bewegliche Element ein elektrisch leitendes Bauteil aufweist, welches eine Länge aufweist, so dass alle drei Spulen mittels des Bauteils überdeckt werden können. Insbesondere kann auch vorgesehen sein, dass das elektrisch leitende Bauteil eine Länge aufweist, so dass das Bauteil lediglich eine oder zwei Erregerspulen überdeckt. Vorzugsweise können auch mehrere elektrisch leitende Bauteile vorgesehen sein, welche entsprechend unterschiedliche Längen aufweisen können. Insbesondere umfasst die Positionserfassungsvorrichtung mehrere Module.

Ein elektrisch leitendes Bauteil, welches alle drei Erregerspulen überdeckt, wird auch in allen drei Erregerspulen ein entsprechendes Störsignal induzieren. Ein elektrisch leitendes Bauteil, welches lediglich eine oder zwei Erregerspulen überdeckt, kann insofern auch nur ein Störsignal in der einen oder in beiden Erregerspulen induzieren. Somit kann eine Identifikation eines beweglichen Elements umfassend solche elektrisch leitenden Bauteile erreicht werden. Dieses Prinzip ist natürlich auch auf mehr als drei Erregerspulen anwendbar. Vorzugsweise können auch vier oder mehrere Erregerspulen vorgesehen sein, welche insbesondere in einem Modul integriert werden können. Vorzugsweise kann auch ein Abstand zwischen zwei oder mehr elektrisch leitenden Bauteilen variiert werden, so dass auch über einen Abstand eine entsprechende Zuordnung zu einem beweglichen Element ermöglicht ist. Allgemein können die elektrisch leitenden Bauteile eine gleiche oder eine unterschiedliche geometrische Form aufweisen. Vorzugsweise können sich die Bauteile in ihrer Länge und/oder ihrer Breite und/oder ihrer Höhe und/oder durch ihr Material unterscheiden. Es kann insbesondere vorgesehen sein, dass sämtliche elektrisch leitende Bauteile gleich gebildet sind bis auf ein elektrisch leitendes Bauteil, welches sich durch seine Geometrie und/oder sein Material von den anderen Bauteilen unterscheidet. Ein bewegliches Element mit einem solchen unterschiedlichen Bauteil kann insofern in vorteilhafter Weise eineindeutig erkannt werden. Insbesondere in einem geschlossenen System mit mehreren beweglichen Elementen ist so eine eineindeutige Kennung des einen beweglichen Elements ermöglicht mit dem unterschiedlichen Bauteil, da sich eine Reihenfolge der Elemente in dem geschlossenen System nicht ändern kann.

Nach einer bevorzugten Ausführungsform der Erfindung wird von der Antriebsvorrichtung auf das bewegliche Element eine elektrische Energie übertragen. Hierfür kann beispielsweise im Fall des Linearmotors in den bereits vorhandenen Spulen des Linearmotors längs des Verfahrbereichs oder Verfahrwegs, die das Drehfeld für die Linearbewegung der Schlitten erzeugen, zusätzlich ein hochfrequenter Strom, beispielsweise im Bereich von einigen 100 Hz, eingeprägt werden. Das hieraus entstehende Feld kann dann beispielsweise in einer Empfängerspule, welche insbesondere auf dem beweglichen Element, beispielsweise dem Schlitten, angeordnet ist, eine Spannung beeinflussen, ohne hierbei die Linearbewegung des Schlittens zu beeinflussen. Vorzugsweise können aber auch Spulen des Linearmotors für eine solche Energieübertragung verwendet werden, welche zum Zeitpunkt der Energieübertragung noch nicht für eine Linearbewegungskraftbildung bestromt werden. Eine solche kabellose Energieübertragung entlang des Verfahrweges ermöglicht insbesondere eine Übertragung von Leistungen von einigen Watt pro Spule. Es wird somit in vorteilhafter Weise eine drahtlose Energieübertragung auf das bewegte System, also beispielsweise den Schlitten, bei gleichzeitiger Nutzung der Elektronik und dem feststehenden Teil des Motors, also beispielsweise dem Linearmotor, insbesondere der Spulen, zur Erzeugung der Bewegungskraft und der Energieübertragung ermöglicht.

Die Erfindung wird im Folgenden anhand von bevorzugten Ausführungsbeispielen unter Bezugnahme auf Figuren näher erläutert. Hierbei zeigen
- Fig. 1: eine Vorrichtung zum Erfassen einer Position eines beweglichen Elements einer Antriebsvorrichtung,
- Fig. 2: eine weitere Vorrichtung zum Erfassen einer Position eines beweglichen Elements einer Antriebsvorrichtung,
- Fig. 3: ein Ablaufdiagramm eines Verfahrens zum Erfassen einer Position eines beweglichen Elements einer Antriebsvorrichtung,
- Fig. 4: ein weiteres Ablaufdiagramm eines Verfahrens zum Erfassen einer Position eines beweglichen Elements einer Antriebsvorrichtung,
- Fig. 5: eine Antriebsvorrichtung,
- Fig. 6: eine weitere Antriebsvorrichtung,
- Fig. 7: eine weitere Antriebsvorrichtung,
- Fig. 8: ein Modul umfassend zwei Erregerspulen mit zugeordneten Sekundärspulen,
- Fig. 9: ein schematischer Aufbau einer Sekundärspule,
- Fig. 10: ein weiteres Modul umfassend drei Erregerspulen mit zugeordneten Sekundärspulen,
- Fig. 11: einen Graphen, welcher einen zeitlichen Verlauf eines Erregerimpulses und einer induzierten Spulenspannung zeigt.

Im Folgenden werden für gleiche Merkmale gleiche Bezugszeichen verwendet.

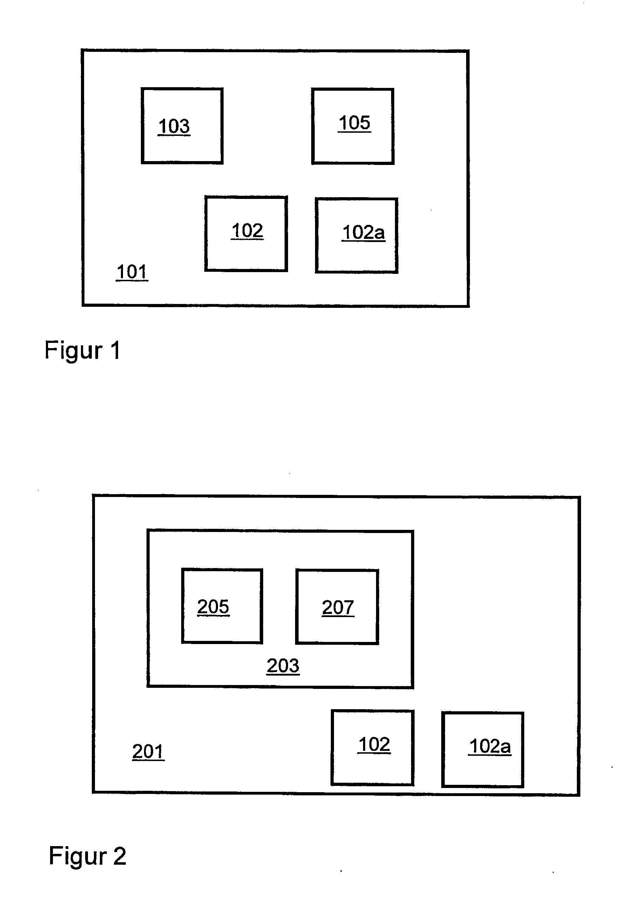

Fig. 1 zeigt eine Vorrichtung 101 zum Erfassen einer Position eines beweglichen Elements (nicht gezeigt) einer Antriebsvorrichtung (nicht gezeigt). Die Positionserfassungsvorrichtung 101 weist zumindest eine Erregerspule 102 und zumindest eine der Erregerspule zugeordnete Sekundärspule 102a auf. Vorzugsweise können auch mehrere Erregerspulen und/oder mehrere Sekundärspulen vorgesehen sein. Die Vorrichtung 101 umfasst ferner einen Impulsgeber 103, welcher einen elektrischen Erregerimpuls auf die Erregerspule 102 beaufschlagen kann. Aufgrund des Beaufschlagens des elektrischen Erregerimpulses auf die Erregerspule 102 wird eine elektrische Spulenspannung in der Sekundärspule 102a induziert. Des Weiteren ist ein Detektor 105 vorgesehen, welcher die Sekundärspulenspannung messen kann. Basierend auf der gemessenen Spulenspannung kann die Position des beweglichen Elements bestimmt werden. Beispielsweise kann für das Bestimmen eine Auswertevorrichtung vorgesehen sein.

Fig. 2 zeigt eine weitere Vorrichtung 201 zum Erfassen einer Position eines beweglichen Elements (nicht gezeigt) einer Antriebsvorrichtung (nicht gezeigt). Die Vorrichtung 201 weist eine logische Schaltung 203 auf, welche vorzugsweise als ein FPGA oder als ein ASIC gebildet ist. Die logische Schaltung 203 weist einen Impulsgeber 205 auf, welcher einen elektrischen Erregerimpuls auf die Erregerspule 102 zum induzieren einer elektrischen Spulenspannung in der Sekundärspule 102a beaufschlagen kann. Ferner weist die logische Schaltung 203 einen Detektor 207 zum Messen der Sekundärspulenspannung auf. Der Impulsgeber 205 und der Detektor 207 können vorzugsweise als elektronische Schaltung in der logischen Schaltung 203 gebildet sein. Es ist aber auch insbesondere möglich, dass der Impulsgeber 205 und/oder der Detektor 207 in der logischen Schaltung 203 in Software realisiert sein können.

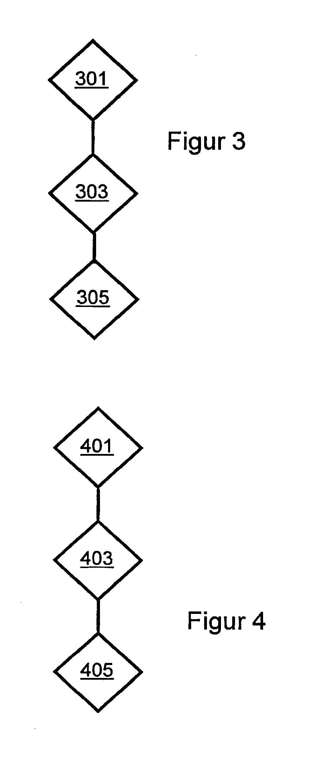

Fig. 3 zeigt ein Ablaufdiagramm eines Verfahrens zum Erfassen einer Position eines beweglichen Elements einer Antriebsvorrichtung mittels einer Positionserfassungsvorrichtung umfassend eine Erregerspule und eine Sekundärspule aufweist, die der Erregerspule zugeordnet ist. In einem Schritt 301 wird ein elektrischer Erregerimpuls auf die Erregerspule beaufschlagt, so dass eine elektrische Spannung bzw. Spulenspannung in der Sekundärspule induziert wird. In einem folgenden Schritt 303 wird dann die Sekundärspulenspannung in der Sekundärspule gemessen. Basierend auf der gemessenen Sekundärspulenspannung wird in einem Schritt 305 die Position des beweglichen Elements bestimmt.

Fig. 4 zeigt ein Ablaufdiagramm eines anderen Verfahrens zum Erfassen einer Position eines beweglichen Elements einer Antriebsvorrichtung. In einem Schritt 401 wird ein elektrischer Erregerimpuls auf die Erregerspule beaufschlagt. Als Folge wird dadurch eine elektrische Spannung in der Sekundärspule induziert. In einem Schritt 403 wird die Sekundärspulenspannung für eine digitale Weiterverarbeitung abgetastet und digitalisiert. In einem folgenden Schritt 405 wird basierend auf den abgetasteten und digitalisierten Messdaten die Position des beweglichen Elements bestimmt.

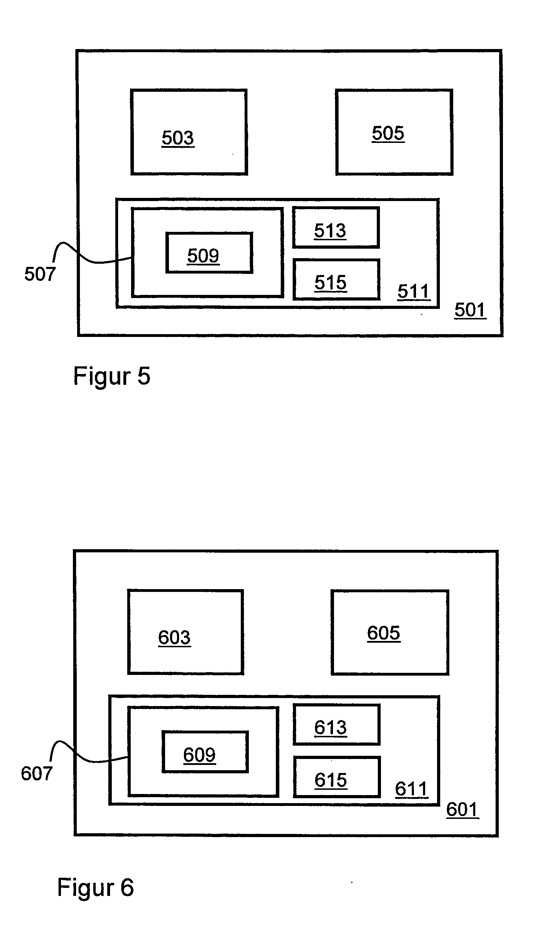

Fig. 5 zeigt eine Antriebsvorrichtung 501 umfassend ein bewegliches Element 503. Das bewegliche Element 503 wird mittels eines Antriebs 505 verlagert. Des Weiteren sind eine Erregerspule 507 und eine der Erregerspule 507 zugeordnete Sekundärspule 509 gebildet, die von einer Vorrichtung 511 umfasst sind, welche eine Position des beweglichen Elements 503 der Antriebsvorrichtung 505 erfassen kann. Die Positionserfassungsvorrichtung 511 umfasst ferner einen Detektor 513 und einen Impulsgeber 515. Bei der Vorrichtung 511 kann es sich beispielsweise um die Positionserfassungsvorrichtung 101 aus Fig. 1 oder die Positionserfassungsvorrichtung 201 aus Fig. 2 handeln. Die Vorrichtung 511 kann wie hier gezeigt in die Antriebsvorrichtung 501 integriert gebildet sein. Alternativ kann insbesondere vorgesehen sein, dass die Positionserfassungsvorrichtung 511 unabhängig von der Antriebsvorrichtung 501 betrieben wird, so dass sie beispielsweise an bestehenden Antriebsvorrichtungen nachgerüstet werden kann. Vorzugsweise kann die Positionserfassungsvorrichtung 511 als ein getrennt von der Antriebsvorrichtung 501 gebildetes eigenständiges Modul gebildet sein, welches nachträglich in die Antriebsvorrichtung 501 integriert werden kann.

Fig. 6 zeigt eine andere Antriebsvorrichtung 601. Die Antriebsvorrichtung 601 umfasst einen als Schlitten 603 ausgebildetes bewegliches Element, welcher mittels eines Linearmotors 605 verlagert werden kann, insbesondere linear verlagert werden kann. Des Weiteren ist eine Positionserfassungsvorrichtung 611 vorgesehen, welche eine Position des Schlittens 603 erfassen kann. Bei der Positionserfassungsvorrichtung 611 kann es sich beispielsweise um die Vorrichtung 101 aus Fig. 1 oder die Vorrichtung 201 aus Fig. 2 handeln. Die Positionserfassungsvorrichtung 611 umfasst eine Erregerspule 607, welcher eine Sekundärspule 609 zugeordnet ist. Eine Erregerspule im Sinne der vorliegenden Erfindung kann allgemein auch als eine Primärspule bezeichnet werden. Die Positionserfassungsvorrichtung 611 umfasst ferner einen Detektor 613 und einen Impulsgeber 615. In einer nicht gezeigten Ausführungsform können auch mehrere Schlitten vorgesehen sein. Insbesondere können auch mehrere Erregerspulen und/oder mehrere Sekundärspulen gebildet sein. Die Positionserfassungsvorrichtung 611 beaufschlagt auf die Erregerspule 607 einen elektrischen Erregerimpuls. Dadurch wird eine elektrische Spannung in der Sekundärspule 609 induziert. Wenn sich nun beispielsweise der Schlitten 603 über der Sekundärspule 609 befindet, wird das elektromagnetische Feld der Sekundärspule 609 gestört bzw. beeinflusst. Diese Störung bzw. diese Beeinflussung schlägt sich dann in einer entsprechenden induzierten Spulenspannung nieder, so dass mittels einer Messung der Spulenspannung erfasst werden kann, ob sich der Schlitten 603 über der Sekundärspule 609 befindet. Wenn sich kein Schlitten 603 über der Sekundärspule 609 befindet, so wird keine Störung bzw. Beeinflussung des elektromagnetischen Feldes festgestellt bzw. gemessen.

Ein Linearmotor im Sinne der vorliegenden Erfindung entspricht insbesondere einer linearen Ausführung einer rotierenden Maschine aufweisend ein Strom durchflossenes Primärteil, das einem Stator eines Rotationsmotors vergleichbar ist, und ein Reaktionsteil, d.h. einem Sekundärteil, das einem Rotor des Rotationsmotors entspricht. Bei Linearmotoren kann insbesondere zwischen Asynchron- und Synchronmotoren unterschieden werden, wobei bei der asynchronen Bauweise das Sekundärteil mit Kurzschlussstäben bestückt ist, beim Synchronmotor dagegen aus Permanentmagneten besteht. Synchronmotoren weisen insbesondere den Vorteil auf, dass sie einen hohen Wirkungsgrad und hohe Dauervorschubkräfte aufweisen. Linearmotoren im Sinne der vorliegenden Erfindung können insbesondere zur Erzeugung von translatorischen Vorschubbewegungen verwendet werden.

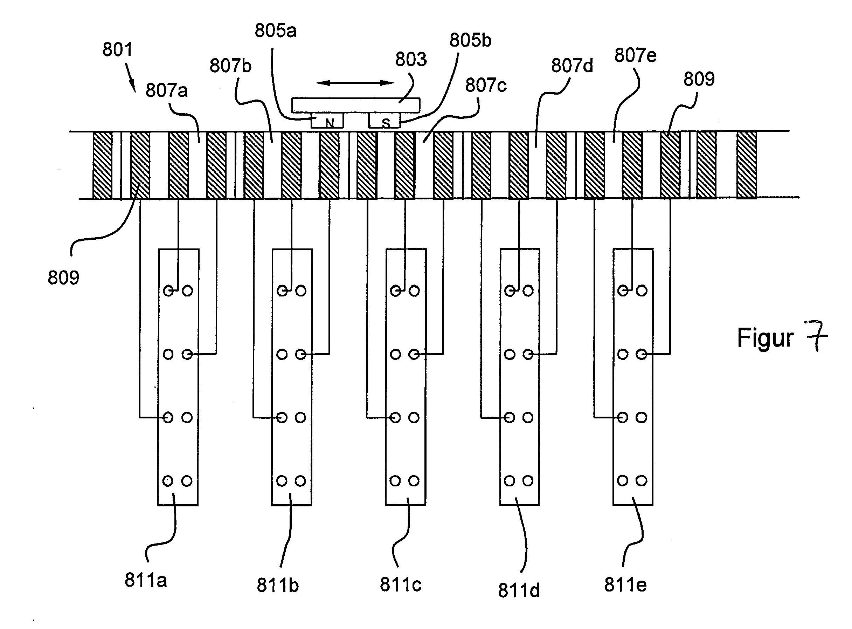

Fig. 7 zeigt eine andere Antriebsvorrichtung 801. Die Antriebsvorrichtung 801 ist als ein Linearmotorsystem ausgebildet. Die Antriebsvorrichtung 801 umfasst einen Schlitten 803, wobei vorzugsweise auch mehrere Schlitten gebildet sein können. Der Schlitten 803 weist zwei Dauermagnete 805a und 805b auf, welche vorzugsweise auf einer Platte aus einem magnetischen Material (nicht gezeigt) angeordnet sein können. Die Dauermagnete 805a und 805b, welche auch als Permanentmagnete bezeichnet werden können, sind abwechselnd in Nord- und Südausrichtung angeordnet. In einer nicht gezeigten Ausführungsform können auch mehrere Permanentmagnete vorgesehen sein, welche dann abwechselnd in Nord- und Südausrichtung auf dem Schlitten 803 bzw. auf der Platte angeordnet sind.

Ferner sind entlang eines Verfahrweges mehrere Wegelemente 807a, 807b, 807c, 807d und 807e gebildet. Vorzugweise können auch mehr als fünf oder weniger als fünf Wegelemente gebildet sein. Insbesondere bilden die Wegelemente einen in sich geschlossenen Verfahrweg. D.h. insbesondere, dass ein Anfang des Verfahrwegs auch seinem Ende entspricht. Allgemein kann ein Verfahrweg, ob geschlossen oder nicht, jede beliebige Geometrie aufweisen, beispielsweise eine Gerade, einen Kreis, einen Bogen oder eine Kurve, beispielsweise eine S-Kurve.

Jedes Wegelement 807a bis 807e umfasst drei Spulen 809, welche auch als Antriebsspulen bezeichnet werden können. Vorzugsweise können auch mehr oder weniger als drei Antriebsspulen pro Wegelement 807a bis 807e vorgesehen sein. Eine Anzahl der Antriebsspulen kann pro Wegelement unterschiedlich oder gleich sein.

Ferner ist jedem Wegelement 807a bis 807e eine entsprechende Elektronik 811a, 811b, 811c, 811d und 811e zur Bestromung der Antriebsspulen 809 zugeordnet. Mittels der Elektroniken 811a bis 811e ist eine individuelle Bestromung der Antriebsspulen 809 ermöglicht. Über diese individuelle Bestromung der einzelnen Antriebsspulen 809 wird dann ein magnetisches Feld erzeugt, so dass sich über das Kreuzprodukt des erzeugten magnetischen Feldes mit dem magnetischen Feld der Permanentmagnete 805a und 805b auf dem Schlitten 803 eine Vorschubskraft einstellt, so dass in vorteilhafter Weise eine Bewegung, insbesondere eine Linearbewegung, des Schlittens 803 in Geschwindigkeit und Position regelbar ist. Die Bestromung der einzelnen Antriebsspulen 809 wird dabei durch ein übergeordnetes Steuerungssystem (nicht gezeigt) so vorgegeben, dass sich eine kontinuierliche Bewegung des Schlittens 803 ergibt. Die Spulen können dabei zeitlich gesehen immer wieder anderen Schlitten zugeordnet werden. Dadurch lässt sich in vorteilhafter Weise eine kontaktlose Bewegung von beliebig vielen Schlitten auf einem gemeinsamen Verfahrweg mit verschiedensten ineinander übergehenden Geometrien, beispielsweise Gerade, Kreis, Bogen, Kurve oder S-Kurve, auch endlos in einem geschlossenen Umlauf realisieren. Der Umlauf kann auch offen sein.

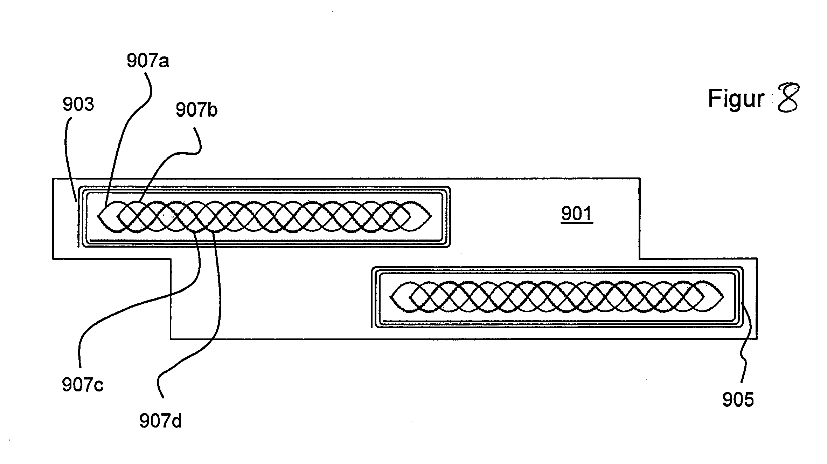

Die Antriebsvorrichtung 801 umfasst ferner ein Positionserfassungssystem bzw. eine Positionserfassungsvorrichtung, welches bzw. welche die Position des beweglichen Schlittens 803 erfassen kann. Insbesondere kann die Positionserfassungsvorrichtung eine Linearposition des Schlittens 803 erfassen. Der Übersicht halber ist die Positionserfassungsvorrichtung in Fig. 7 nicht gezeigt. Die Positionserfassungsvorrichtung umfasst insbesondere mehrere Primärspulen und mehrere den Primärspulen zugeordnete Sekundärspulen. Diese Spulen können in einem Modul (vgl. Fig. 8) integriert sein. Fährt nun der Schlitten 803 entlang des Verfahrweges über die einzelnen Wegelemente 807a bis 807e, so wird der Schlitten 803 ein in den Sekundärspulen induziertes elektromagnetisches Feld stören, was mittels einer Messung der Sekundärspulenspannung erfasst werden kann.

Fig. 8 zeigt ein Modul 901, welches allgemein auch als ein Spulenmodul bezeichnet werden kann. Das Spulenmodul 901 umfasst zwei Erregerspulen 903 und 905, wobei den Erregerspulen 903 und 905 jeweils mehrere Sekundärspulenpaare zugeordnet sind. Das erste Sekundärspulenpaar ist gebildet aus einer ersten Kosinussekundärwicklung 907a und einer ersten Sinussekundärwicklung 907b. Das zweite Sekundärspulenpaar ist gebildet aus einer zweiten Kosinussekundärwicklung 907c und einer zweiten Sinussekundärwicklung 907d. Der Übersicht halber wurden nur die ersten Sekundärwicklungen der Erregerspule 903 mit entsprechenden Bezugszeichen gekennzeichnet. Analog sind auch die Sekundärspulen der Erregerspule 905 ausgebildet.

Die Erregerspulen 903 und 905 sind teilweise überlappend nebeneinander angeordnet, so dass in vorteilhafter Weise eine Positionsbestimmung über beliebig lange Wegstrecken unterbrechungsfrei ermöglicht ist. Solche Spulenmodule 901 können beispielsweise einfach nebeneinander angeordnet werden, um so beliebig lange Wegstrecken zu erfassen.

Solche Spulenmodule wie das Spulenmodul 901 können insbesondere in den in Fig. 7 gezeigten Wegelementen 807a bis 807e integriert sein. Allgemein können solche Spulenmodule auch in einer Positionserfassungsvorrichtung direkt integriert sein. Somit können beispielsweise vorhandene Antriebsvorrichtungen, insbesondere Linearantriebsvorrichtungen, nachträglich besonders einfach und günstig aufgerüstet werden für eine Positionserfassung.

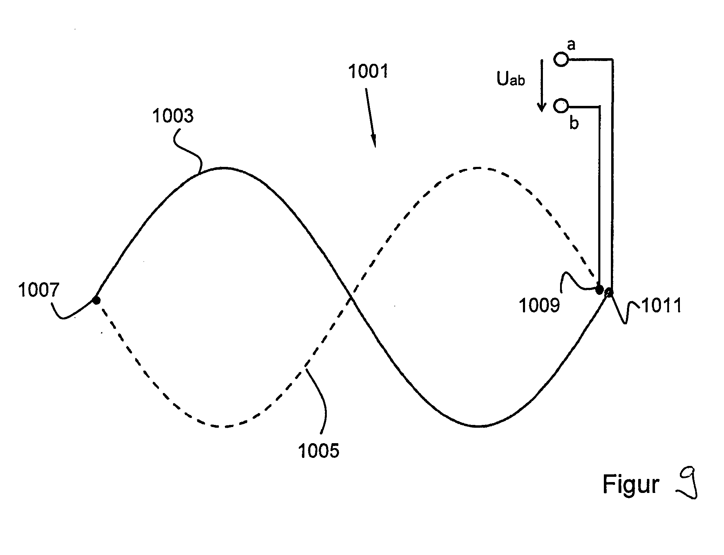

Fig. 9 zeigt eine schematische Darstellung einer einzelnen Sekundärwicklung 1001. Die Sekundärwicklung 1001 ist vorzugsweise als Leiterbahn auf einer Platine (nicht gezeigt) gebildet. Hierbei sind eine "positive" sinusförmige Leiterbahn 1003 und eine "negative" sinusförmige Leiterbahn 1005 vorgesehen. Die Leiterbahn 1003 ist vorzugsweise in einer ersten Lage angeordnet, die Leiterbahn 1005 ist vorzugsweise in einer zweiten Lage angeordnet. Die erste Lage kann auch als Lage A bezeichnet werden. Die zweite Lage kann auch als Lage B bezeichnet werden. Beide Leiterbahnen 1003 und 1005 sind an einem Punkt 1007 durchkontaktiert und miteinander verbunden. Der Verbindungspunkt 1007 kann auch als eine Durchkontaktierung bezeichnet werden.

Die Leiterbahn 1003 weist ein erstes Wicklungsende 1010 auf. Die Leiterbahn 1005 weist ein zweites Wicklungsende 1009 auf. An den beiden Wicklungsenden 1009 und 1011 wird dann eine Differenzspannung der Sekundärwicklung 1001 gemessen. Die Differenzspannung kann als U_{ab} bezeichnet werden, wobei "a" für das erste Wicklungsende 1011 steht und "b" für das zweite Wicklungsende 1009 steht.

Vorzugsweise wird der Punkt "b", also das zweite Wicklungsende 1009, auf Masse gelegt. Dann wird vorzugsweise eine an dem Punkt "a" anliegende Spannung auch gegen Masse gemessen, so dass auch in diesem Fall eine Differenzspannung U_{ab} der Sekundärwicklung 1001 bzw. der Sekundärspule gemessen wird.

Im Folgenden soll das erfindungsgemäße Messprinzip für eine Positionserfassung des Schlittens 803 aus Fig. 7 anhand der in Fig. 8 gezeigten Spulenanordnung bzw. Spulenmodul näher erläutert werden.

Die außen liegende Erregerspule 903 mit n Wicklungen umfasst mehrere innen liegende Sekundärspulen, zum Teil gebildet aus den Sekundärwicklungen 907a bis 907d. Vorzugsweise können sämtliche Spulen, also Erregerspulen und Sekundärspulen, durch Leiterbahnen auf einer Platine realisiert werden. Vorzugsweise weisen die Sekundärspulen eine sinus- bzw. kosinusförmige Geometrie auf. Insbesondere sind diese beiden um 90° versetzt zueinander angeordnet. Vorzugsweise sind aber auch andere Geometrien wie beispielsweise eine dreiecksförmige Geometrie und/oder andere Phasenverschiebungen als 90° möglich. Die Erregerspule 903 wird insbesondere mit einer Wechselspannung gespeist und die Ausgangspannung der Sekundärspulen wird gemessen. Die Differenz zwischen den Ausgangsspannungen, beispielsweise U_{ab}, ist annähernd null, wenn die Felder der Spulen nicht durch elektrisch leitenden Gegenstände, beispielsweise dem Schlitten 803 gestört werden. Fährt nun ein Schlitten 803 über die Spulen, so wird eine Differenzspannung in der Sekundärspule bzw. zwischen den Sekundärspulen gemessen. Insbesondere kann vorgesehen sein, dass der Schlitten 803 ein elektrisch leitendes Plättchen aufweist, welches eine effektive Breite ungleich der Periodenlänge der Sekundärspule aufweist. Über die Differenzspannung ist es also möglich, auf die Position des Schlittens 803 bzw. des metallischen Plättchens zu schließen. Aufgrund der speziellen Anordnung, der Phasenverschiebung und der Form der Sekundärspulen kann eine mathematische Funktion zur Berechnung der Position herangezogen werden. Die Frequenz der Wechselspannung, die die Erregerspule 903 speist, liegt vorzugsweise im Bereich von 100 kHz bis 10 MHz. Das erfindungsgemäße Messverfahren lässt es hierbei insbesondere in vorteilhafter Weise auch zu, dass mehrere Paare von Sekundärspulen in einer Erregerspule untergebracht werden können. In diesem Fall werden dann vorzugsweise für jedes Paar von Sekundärspulen zwei Differenzspannungen gemessen. Somit ist es in vorteilhafter Weise ermöglicht, eine Position des Schlittens 803 bzw. des Plättchens über eine längere Strecke kontinuierlich zu messen.

Das im Zusammenhang mit der Erregerspule 903 beschriebene Messprinzip gilt analog auch für die Erregerspule 905 bzw. für weitere in einem Spulenmodul angeordnete Erregerspulen mit zugeordneten Sekundärspulen.

Das beschriebene erfindungsgemäße Messprinzip lässt sich nicht nur für gerade Wegstrecken anwenden, sondern auch auf beliebige Formen. Hierzu wird dann insbesondere eine Form der Erreger- bzw. Primärspule und den Sekundärspulen derart verändert, dass ein Verhältnis zwischen ihnen gleich bleibt. Auf diese Weise können dann beispielsweise in vorteilhafter Weise beliebige Geometrien wie Geraden oder verschiedenste Kurven erfasst werden.

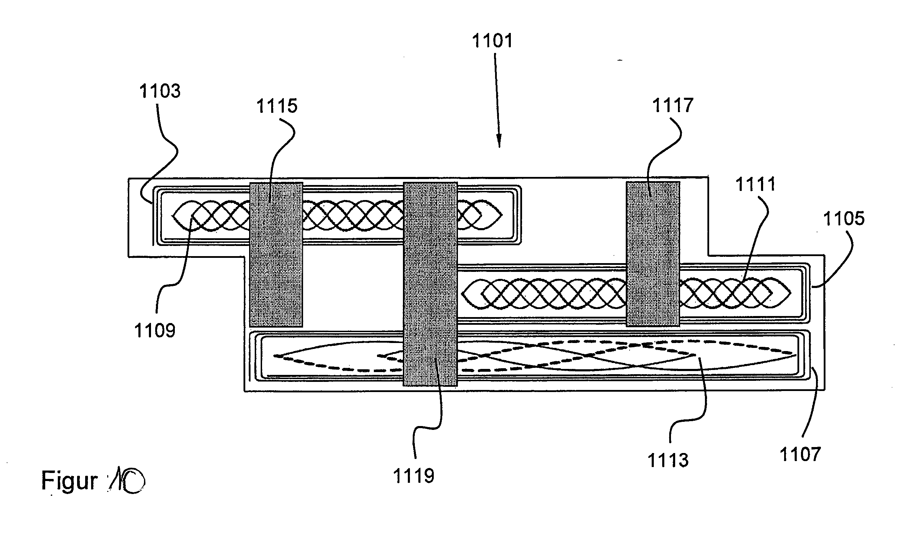

Fig. 10 zeigt ein weiteres Spulenmodul 1101 umfassend drei Erregerspulen 1103, 1105 und 1107. Die drei Erregerspulen 1103, 1105 und 1107 sind zumindest teilweise überlappend nebeneinander angeordnet. Jeder Erregerspule 1103, 1105 und 1107 sind mehrere Paare 1109, 1111 und 1113 von Sekundärspulen zugeordnet. Über dem Spulenmodul 1101 befinden sich drei elektrisch leitende Plättchen 1115, 1117 und 1119. Die drei Plättchen 1115, 1117 und 1119 sind jeweils auf einem nicht gezeigten Schlitten angeordnet, der jeweils beispielsweise gemäß dem Schlitten 803 aus Fig. 7 ausgebildet sein kann. Die elektrisch leitenden Plättchen 1115 und 1117 der beiden äußeren Schlitten weisen eine gleiche Geometrie auf, wohingegen das elektrisch leitende Plättchen 1119 des mittleren Schlittens eine hiervon abweichende Geometrie aufweist. Insbesondere ist die Länge des Plättchens 1119 des mittleren Schlittens verschieden von der Länge der Plättchen 1115 und 1117 der beiden äußeren Schlitten. Die Länge des Plättchens 1119 ist ausreichend, um alle drei Erregerspulen 1103, 1105 und 1107 überdecken zu können. Fährt nun lediglich ein äußerer Schlitten, beispielsweise der Schlitten, dem das Plättchen 1115 zugeordnet ist, über das Spulenmodul 1101, so wird lediglich in den Sekundärspulen 1109, bzw. wenn alle drei Schlitten weiter nach Rechts bewegt werden, zusätzlich in den Sekundärspulen 1111 ein Störsignal induziert. Somit ist zwar feststellbar, dass sich an der Stelle ein bewegliches Element befindet, es ist aber noch keine eindeutige Identifizierung des Schlittens möglich. Fährt nun aber der mittlere Schlitten, dem das Plättchen 1119 zugeordnet ist, über das Spulenmodul 1101, so wird sowohl in den Sekundärspulen 1109 und 1111 (in Abhängigkeit der Position des Schlittens), als auch in den Sekundärspulen 1113 ein Störsignal induziert. Da lediglich dieser Schlitten ein elektrisch leitendes Plättchen 1119 aufweist, welches auch die Sekundärspule 1113 überdeckt, ist nun eindeutig feststellbar, wo genau sich dieser Schlitten befindet und er ist somit identifizierbar. Sind eine Mehrzahl an Schlitten in einem geschlossenen umlaufenden System angeordnet, so genügt es, einen Schlitten mit einem verlängerten Plättchen 1119 auszustatten. Da dieser Schlitten eindeutig erkannt wird, ist auch die Reihenfolge der weiteren Schlitten stets eindeutig, da sich ihre Reihenfolge ja nicht ändern kann. Weiterhin bietet eine solche Anordnung mit unterschiedlichen elektrisch leitenden Plättchen auch den Vorteil, dass darin keine Initialbewegung der Schlitten an beliebigen anderen Sensoren vorbei erfolgen muss, um eine eineindeutige Erkennung jedes einzelnen Schlittens zu ermöglichen.

In einem nicht gezeigten Ausführungsbeispiel kann das Spulenmodul auch mehr als drei Erregerspulen mit zugeordneten Paaren von Sekundärspulen umfassen. Insbesondere können auch Schlitten mit mehr als drei Plättchen oder weniger als drei Plättchen vorgesehen sein. Bei einem Schlitten mit zwei Plättchen, ist eines der beiden Plättchen vorzugsweise so ausgebildet bzw. auf dem Schlitten angeordnet, dass dieses Plättchen nur eine Erregerspule mit seinen zugeordneten Sekundärspulen überdeckt. Solche Schlitten können insbesondere dann auch dadurch voneinander unterschieden werden, indem ein Abstand zwischen beiden Plättchen variabel ist, so dass dieser Abstand variiert werden kann. Jeder dieser Schlitten hat dann seinen eigenen definierten Abstand der Plättchen untereinander und kann insofern in vorteilhafter Weise eindeutig identifiziert werden.

In einer weiteren nicht gezeigten Ausführungsform kann vorgesehen sein, dass eines der Plättchen 1115, 1117 und 1119 breiter oder schmaler ist als die beiden anderen Plättchen. Da die elektromagnetische Störung der induzierten Spulenspannung insbesondere von der Breite eines Plättchens abhängt, kann somit in vorteilhafter Weise eine eineindeutige Kennung des Schlittens mit dem Plättchen mit einer von den anderen Plättchen unterschiedlichen Breite erreicht werden. In einer weiteren nicht gezeigten Ausführungsform kann diese eineindeutige Kennung auch mittels eines Plättchens mit einer unterschiedlichen Breite und mit einer unterschiedlichen Länge wie weiter oben beschrieben bewirkt werden. Obwohl hier nur drei Plättchen beschrieben wurden, soll dies keine Einschränkung bedeuten. Insbesondere können auch mehrere oder weniger Plättchen vorgesehen sein. Das beschriebene Prinzip der eineindeutigen Kennung ist auf eine beliebige Anzahl an Plättchen übertragbar.

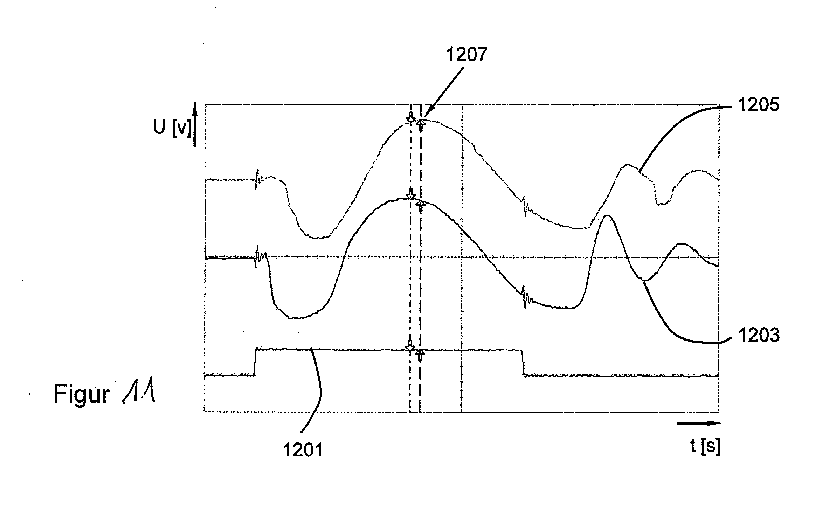

Fig. 11 zeigt einen Graphen, welcher einen zeitlichen Verlauf eines Erregerimpulssignals und eines Spulenspannungssignals der Sekundärspule zeigt. Aufgetragen ist die Spannung U in Volt über eine Zeit t in Sekunden. Das Bezugszeichen 1201 kennzeichnet den zeitlichen Verlauf des Erregerimpulses. Das Bezugszeichen 1203 kennzeichnet das induzierte Spannungssignal, welches direkt an der Sekundärspule anliegt. Das Bezugszeichen 1205 kennzeichnet das induzierte Spannungssignal der Sekundärspule nach einer Vorverstärkung. Eine solche Vorverstärkung kann allgemein insbesondere mittels einer Vorverstärkereinrichtung durchgeführt werden.

Der Erregerimpuls 1201 weist eine Rechteckform auf, wobei dieser insbesondere nicht direkt auf die Erregerspule beaufschlagt wird, sondern vorzugsweise auf einen Schwingkreis, insbesondere einem harmonischen Schwingkreis. Dieser Schwingkreis harmonisiert den Rechteckimpuls und bildet insbesondere einen Erregerimpuls mit einer harmonischen Schwingung, insbesondere einer Sinusschwingung oder Cosinusschwingung, wobei der harmonisierte Erregerimpuls vorzugsweise eine zeitlich abnehmende Amplitude aufweist. Dieser Erregerimpuls wird dann auf die Erregerspule beaufschlagt.

Der Punkt mit dem Bezugszeichen 1207 kennzeichnet das Maximum der Spulenspannung der Sekundärspule. Eine Messung des Spulenspannungssignals 1203 oder 1205 findet vorzugsweise in einem vorbestimmten Zeitfenster statt, welches das jeweilige Maximum umfasst. Um dieses Maximum 1207 zu erfassen, kann dieses vorbestimmte Zeitfenster auf der Zeitachse verschoben werden.

Eine direkte Abtastung der Spannung 1203 an der Sekundärspule oder der Spannung 1205 nach einer Vorverstärkung erfolgt vorzugsweise mittels eines Analog-Digital-Wandlers im Bereich von insbesondere einigen Nanosekunden. Die Auswertung der gemessenen Spannungen erfolgt dann insbesondere mittels eines logischen Bausteins, insbesondere einer logischen Schaltung, beispielsweise einem FPGA oder einem ASIC.

Ein solcher logischer Baustein oder eine solche logische Schaltung kann ferner verwendet werden, um eine Wechselspannung für die Erregerwicklung zu erzeugen. Insbesondere kann ein harmonischer Schwingkreis an die logische Schaltung angeschlossen werden. Vorzugsweise wird anstelle einer kontinuierlichen Wechselspannung eine abklingende Schwingung erzeugt. Die logische Schaltung kann insbesondere ferner einen Startzeitpunkt der Wechselspannung bzw. der Schwingung, also des Erregerimpulses, steuern.

In einer nicht gezeigten Ausführungsform steuert die logische Schaltung auch eine Spannungsmessung an den Sekundärspulen. Hierbei wird vorzugsweise die Spulenspannung dann gemessen, wenn das Maximum der Schwingung erreicht ist. Dieser Zeitpunkt bzw. die zeitliche Differenz zum Startzeitpunkt des Beaufschlagens des Erregerimpulses auf die Erregerspule wird vorzugsweise derart geregelt, um in vorteilhafter Weise zu gewährleisten, dass immer im Maximum der Schwingungen gemessen wird. Somit können in vorteilhafter Weise äußere Einflüsse wie beispielsweise Temperaturschwankungen ausgeglichen werden.

Die logische Schaltung kann ferner vorzugsweise eingerichtet sein, eine geeignete Wechselspannung für die Erregerspule zu erzeugen. Insbesondere wird die logische Schaltung per Software so programmiert, dass sie sich auf ein Zeitsignal eines übergeordneten Steuersystems synchronisieren kann, so dass die Erzeugung der Wechselspannung bzw. allgemein des Erregerimpulses synchron zum externen Zeitsignal des Steuersystems bzw. der Steuerung erfolgen kann.

Der Startzeitpunkt der Erzeugung des Erregerimpulses bzw. des gepulsten Erregersignals kann vorzugsweise im Nanosekundenraster verschoben werden. Eine entsprechende Regelung bewirkt insbesondere, dass der Startzeitpunkt der Erzeugung des Erregerimpulses zu einem definierten Zeitpunkt zum externen Zeitsignal der übergeordneten Steuerung bzw. Steuersystems erfolgt. Mittels eines solchen Verfahrens lassen sich somit in vorteilhafter Weise Abtastfrequenzen von einigen Kilohertz erreichen, beispielsweise etwa 50 kHz.

Zusammenfassend ist mittels der vorgenannten Ausführungsbeispiele eine Positionserfassung über mehrere Spulenmodule hinweg ermöglicht, da insbesondere die Positionserfassung synchron und zu einem festen Zeitpunkt in Relation zu einem übergeordneten Steuerungssystem erfolgt. Das Steuerungssystem ist allgemein insbesondere dafür eingerichtet, eine Linearbewegung der einzelnen Schlitten zu steuern.

Wenn zwei Spulenmodule nebeneinander gleichzeitig in Betrieb sind, kann es vorkommen, dass sich die benachbarten Erregerspulen gegenseitig beeinflussen. Beispielsweise kann es vorkommen, dass ein elektromagnetisches Feld der einen Erregerspule einen Strom in den der benachbarten Erregerspule zugeordneten Sekundärspulen induziert, während eine Positionserfassung durchgeführt wird. Dies kann, muss aber nicht, wiederkehrende Positionsfehler erzeugen.

Um eine solche gegenseitige Störung zu verhindern und eine noch genauere Positionserfassung zu ermöglichen, wird erfindungsgemäß vorgeschlagen, dass solch benachbarte Erregerspulen in benachbarten Spulenmodulen zeitversetzt mit einem Erregerimpuls, beispielsweise einer Wechselspannung, beaufschlagt werden. Die Startzeitpunkte der einzelnen Erregerimpulse bzw. der Wechselspannungen werden insbesondere zu dem externen Zeitsignal der übergeordneten Steuerung zeitlich versetzt. Somit können sich nun in vorteilhafter Weise zwei benachbarte Erregerspulen nicht mehr gegenseitig beeinflussen, weil diese nicht zeitgleich in Betrieb sind. Eine entsprechende Steuerungslogik kann vorzugsweise in die programmierbare logische Schaltung integriert sein. Ein Zeitversatz in der Auswertung kann insbesondere bei einer hohen Abtastfrequenz vernachlässigt werden, kann aber auch beispielsweise über eine Interpolation herausgerechnet werden.

Zusammenfassend ermöglicht die Erfindung eine besonders schnelle Auswertung in Antriebsvorrichtungen, insbesondere Linearantriebsvorrichtungen, mit Abtastraten von insbesondere größer als 2 kHz, was vorzugsweise in Bewegungsanwendungen zu Kommutierung, Strom, Drehzahl und/oder Lageregelung verwendet werden kann.

Weiterhin sind mittels der Erfindung eine synchrone Auswertung der einzelnen Spulenmodule zur Positionserfassung durch insbesondere eine Synchronisation auf einem übergeordneten, dass heißt beispielsweise externen Taktgeber (insbesondere aufgrund der Verwendung einer DLL-Schaltung und aufgrund der Verwendung gepulster Erregersignale) und eine störungsfreie Auswertung benachbarter Spulenanordnungen ermöglicht.

Weiterhin ist es mittels der Erfindung ermöglicht, dass einzelne bewegliche Schlitten oder allgemein bewegliche Elemente eindeutig identifiziert werden können, insbesondere, indem andersartige und/oder zusätzliche Plättchen, insbesondere elektrisch leitende Plättchen, an die beweglichen Elemente bzw. an den oder die Schlitten angeordnet werden.

Ferner ermöglicht die Erfindung insbesondere eine drahtlose Energieübertragung auf ein bewegtes System bei gleichzeitiger Nutzung der Elektronik und dem feststehenden Teil des Motors zur Erzeugung der Bewegungskraft und der Energieübertragung.

## Patentansprüche

1. Verfahren zum Erfassen einer Position eines beweglichen Elements (503) einer Antriebsvorrichtung (501) entlang eines Verfahrweges mittels einer Positionserfassungsvorrichtung (511) umfassend entlang eines Verfahrweges mehrere in Richtung des Verfahrweges versetzt angeordnete Erregerspulen (903, 905) und mehrere den Erregerspulen (903, 905) zugeordnete Sekundärspulen, wobei elektrische Erregerimpulse auf die Erregerspulen (903, 905) zum Induzieren von elektrischen Spannungen in den Sekundärspulen beaufschlagt werden, Sekundärspulenspannungen gemessen werden und die Position des beweglichen Elements (503) entlang des Verfahrweges basierend auf den gemessenen Sekundärspulenspannungen bestimmt wird, wobei die Erregerspulen (903, 905) als außen liegende Erregerspulen (903, 905) mit n Wicklungen ausgebildet sind, die jeweils mehrere innen liegende Sekundärspulen (907a-d) umschließen, wobei die innerhalb einer Erregerspule liegenden Sekundärspulen (907a-d) mehrere Sekundärspulenpaare bilden, die jeweils eine Kosinussekundärwicklung (907a, 907c) und eine dazu versetzt angeordnete Sinussekundärwicklung (907b, 907d) aufweisen.

2. Verfahren nach Anspruch 1, **dadurch gekennzeichnet, dass** die jeweils gemessene Sekundärspulenspannung für eine digitale Weiterverarbeitung abgetastet und digitalisiert wird.

3. Verfahren nach Anspruch 1 oder 2, **dadurch gekennzeichnet, dass** die Erregerimpulse eine zeitlich abnehmende Amplitude aufweisen .

4. Verfahren nach Anspruch 3, **dadurch gekennzeichnet, dass** die Erregerimpulse eine zeitlich abklingende Sinusschwingung aufweisen.

5. Verfahren nach einem der vorherigen Ansprüche, **dadurch gekennzeichnet, dass** zwei benachbart angeordnete Erregerspulen (903, 905) jeweils zeitversetzt mit einem Erregerimpuls beaufschlagt werden.

6. Positionserfassungsvorrichtung (511) zum Erfassen einer Position eines beweglichen Elements (503) einer Antriebsvorrichtung (501) entlang eines Verfahrweges, welche mehrere in Richtung des Verfahrweges versetzt angeordnete Erregerspulen (903, 905) und mehrere den Erregerspulen (903, 905) zugeordnete Sekundärspulen aufweist, wobei ein Impulsgeber (513) zum Beaufschlagen von elektrischen Erregerimpulsen auf die Erregerspulen (903, 905) zum Induzieren von elektrischen Spannungen in den Sekundärspulen (509) und ein Detektor (515) zum Messen der Sekundärspulenspannungen gebildet sind, wobei die Erregerspulen (903, 905) als außen liegende Erregerspulen (903, 905) mit n Wicklungen ausgebildet sind, die jeweils mehrere innen liegende Sekundärspulen (907a-d) umschließen, wobei die innerhalb einer Erregerspule liegenden Sekundärspulen (907a-d) mehrere Sekundärspulenpaare bilden, die jeweils eine Kosinussekundärwicklung (907a, 907c) und eine dazu versetzt angeordnete Sinussekundärwicklung (907b, 907d) aufweisen.

7. Positionserfassungsvorrichtung (511) nach Anspruch 6, **dadurch gekennzeichnet, dass** der Detektor (515) mit einem Analog-Digital-Wandler zum Abtasten und Digitalisieren der gemessenen Sekundärspulenspannungen verbunden ist.

8. Positionserfassungsvorrichtung (511) nach Anspruch 6 oder 7, **dadurch gekennzeichnet, dass** der Impulsgeber (513) einen elektrischen Schwingkreis zum Harmonisieren des Erregerimpulses aufweist.

9. Positionserfassungsvorrichtung (511) nach einem der Ansprüche 6 bis 8, **dadurch gekennzeichnet, dass** der Impulsgeber (513) eine logische Schaltung (203) zum Bilden des Erregerimpulses aufweist.

10. Positionserfassungsvorrichtung (511) nach einem der Ansprüche 6 bis 9, **dadurch gekennzeichnet, dass** der Impulsgeber (513) einen internen Taktgeber aufweist.

11. Antriebsvorrichtung (501), mit einem beweglichen Element (503) und einer Positionserfassungsvorrichtung (511) nach einem der Ansprüche 6 bis 10.

12. Antriebsvorrichtung (501) nach Anspruch 11, **dadurch gekennzeichnet, dass** das bewegliche Element (503) zumindest ein elektrisch leitendes Bauteil zum elektromagnetischen Stören des in der zumindest einen Sekundärspule (509) induzierten elektromagnetischen Feldes aufweist.

13. Antriebsvorrichtung (501) nach Anspruch 11 oder 12, **dadurch gekennzeichnet, dass** zumindest zwei Erregerspulen (903, 905) vorgesehen sind, welche zumindest teilweise überlappend nebeneinander angeordnet sind.

14. Antriebsvorrichtung (501) nach einem der Ansprüche 11 bis 13, **dadurch gekennzeichnet, dass** ein Linearmotor (605) zum Verlagern des beweglichen Elements (503) vorgesehen ist.

## Claims

1. Method for detecting a position of a movable element (503) of a drive apparatus (501) along a travel path by means of a position detection apparatus (511) comprising along a travel path a plurality of excitation coils (903, 905) arranged in an offset manner in the direction of the travel path, and a plurality of secondary coils assigned to the excitation coils (903, 905), wherein electrical excitation pulses are applied to the excitation coils (903, 905) in order to induce electrical voltages in the secondary coils, secondary coil voltages are measured and the position of the movable element (503) along the travel path is determined on the basis of the measured secondary coil voltages,
wherein
the excitation coils (903,905) are embodied as outer excitation coils (903, 905) having n windings each enclosing a plurality of inner secondary coils (907a-d), wherein the secondary coils (907a-d) lying within an excitation coil form a plurality of secondary coil pairs each having a cosinusoidal secondary winding (907a, 907c) and a sinusoidal secondary winding (907b, 907d) arranged in a manner offset with respect thereto.

2. Method according to Claim 1, **characterized in that** the respective measured secondary coil voltage is sampled and digitized for digital further processing.

3. Method according to Claim 1 or 2, **characterized in that** the excitation pulses have an amplitude that decreases over time.

4. Method according to Claim 3, **characterized in that** the excitation pulses have a sinusoidal oscillation that decays over time.

5. Method according to any of the preceding claims, **characterized in that** two excitation coils (903, 905) arranged adjacently each have an excitation pulse applied to them with a temporal offset.

6. Position detection apparatus (511) for detecting a position of a movable element (503) of a drive apparatus (501) along a travel path, which has a plurality of excitation coils (903, 905) arranged in an offset manner in the direction of the travel path, and a plurality of secondary coils assigned to the excitation coils (903, 905), wherein a pulse generator (513) for applying electrical excitation pulses to the excitation coils (903, 905) in order to induce electrical voltages in the secondary coils (509) and a detector (515) for measuring the secondary coil voltages are formed,
wherein
the excitation coils (903, 905) are embodied as outer excitation coils (903, 905) having n windings each enclosing a plurality of inner secondary coils (907a-d), wherein the secondary coils (907a-d) lying within an excitation coil form a plurality of secondary coil pairs each having a cosinusoidal secondary winding (907a, 907c) and a sinusoidal secondary winding (907b, 907d) arranged in a manner offset with respect thereto.

7. Position detection apparatus (511) according to Claim 6, **characterized in that** the detector (515) is connected to an analogue-to-digital converter for sampling and digitizing the measured secondary coil voltages.

8. Position detection apparatus (511) according to Claim 6 or 7, **characterized in that** the pulse generator (513) has an electrical resonant circuit for harmonizing the excitation pulse.

9. Position detection apparatus (511) according to any of Claims 6 to 8, **characterized in that** the pulse generator (513) has a logic circuit (203) for forming the excitation pulse.

10. Position detection apparatus (511) according to any of Claims 6 to 9, **characterized in that** the pulse generator (513) has an internal clock generator.

11. Drive apparatus (501), comprising a movable element (503) and a position detection apparatus (511) according to any of Claims 6 to 10.

12. Drive apparatus (501) according to Claim 11, **characterized in that** the movable element (503) has at least one electrically conductive component for electromagnetically interfering with the electromagnetic field induced in the at least one secondary coil (509).

13. Drive apparatus (501) according to Claim 11 or 12, **characterized in that** at least two excitation coils (903, 905) are provided which are arranged alongside one another at least partly in an overlapping manner.

14. Drive apparatus (501) according to any of Claims 11 to 13, **characterized in that** provision is made of a linear motor (605) for displacing the movable element (503).

## Revendications

1. Procédé de détection de la position d'un élément mobile (503) d'un dispositif d'entraînement (501) le long d'une trajectoire au moyen d'un dispositif de détection de la position (511) comprenant le long d'une trajectoire plusieurs bobines d'excitation (903, 905) agencées en décalage dans la direction de la trajectoire et plusieurs bobines secondaires attribuées aux bobines d'excitation (903, 905), des impulsions d'excitation électriques étant appliquées aux bobines d'excitation (903, 905) pour l'induction de tensions électriques dans les bobines secondaires, les tensions des bobines secondaires étant mesurées et la position de l'élément mobile (503) le long de la trajectoire étant déterminée à partir des tensions de bobines secondaires mesurées, les bobines d'excitation (903, 905) étant configurées sous la forme de bobines d'excitation (903, 905) externes comprenant n enroulements, qui entourent chacune plusieurs bobines secondaires internes (907a-d), les bobines secondaires (907a-d) situées à l'intérieur d'une bobine d'excitation formant plusieurs paires de bobines secondaires qui présentent chacune un enroulement secondaire cosinusoïdal (907a, 907c) et un enroulement secondaire sinusoïdal (907b, 907d) agencé en décalage.

2. Procédé selon la revendication 1, **caractérisé en ce que** la tension de bobine secondaire mesurée à chaque fois est analysée et numérisée pour une transformation numérique ultérieure.

3. Procédé selon la revendication 1 ou 2, **caractérisé en ce que** les impulsions d'excitation présentent une amplitude décroissante dans le temps.

4. Procédé selon la revendication 3, **caractérisé en ce que** les impulsions d'excitation présentent une oscillation sinusoïdale déclinant dans le temps.

5. Procédé selon l'une quelconque des revendications précédentes, **caractérisé en ce qu'**une impulsion d'excitation décalée dans le temps est à chaque fois appliquée à deux bobines d'excitations voisines (903, 905).

6. Dispositif de détection de la position (511) pour la détection d'une position d'un élément mobile (503) d'un dispositif d'entraînement (501) le long d'une trajectoire, qui comprend plusieurs bobines d'excitation (903, 905) agencées en décalage dans la direction de la trajectoire et plusieurs bobines secondaires attribuées aux bobines d'excitation (903, 905), un émetteur d'impulsions (513) pour l'application d'impulsions d'excitation électriques aux bobines d'excitation (903, 905) pour l'induction de tensions électriques dans les bobines secondaires (509) et un détecteur (515) pour la mesure des tensions des bobines secondaires étant formés, les bobines d'excitation (903, 905) étant configurées sous la forme de bobines d'excitation (903, 905) externes comprenant n enroulements, qui entourent chacune plusieurs bobines secondaires internes (907a-d), les bobines secondaires (907a-d) situées à l'intérieur d'une bobine d'excitation formant plusieurs paires de bobines secondaires qui présentent chacune un enroulement secondaire cosinusoïdal (907a, 907c) et un enroulement secondaire sinusoïdal (907b, 907d) agencé en décalage.

7. Dispositif de détection de la position (511) selon la revendication 6, **caractérisé en ce que** le détecteur (515) est connecté avec un convertisseur analogique/numérique pour l'analyse et la numérisation des tensions de bobines secondaires mesurées.

8. Dispositif de détection de la position (511) selon la revendication 6 ou 7, **caractérisé en ce que** l'émetteur d'impulsions (513) comprend un circuit oscillant électrique pour l'harmonisation de l'impulsion d'excitation.

9. Dispositif de détection de la position (511) selon l'une quelconque des revendications 6 à 8, **caractérisé en ce que** l'émetteur d'impulsions (513) comprend un circuit logique (203) pour la formation de l'impulsion d'excitation.

10. Dispositif de détection de la position (511) selon l'une quelconque des revendications 6 à 9, **caractérisé en ce que** l'émetteur d'impulsions (513) comprend un générateur de synchronisation interne.

11. Dispositif d'entraînement (501), comprenant un élément mobile (503) et un dispositif de détection de la position (511) selon l'une quelconque des revendications 6 à 10.

12. Dispositif d'entraînement (501) selon la revendication 11, **caractérisé en ce que** l'élément mobile (503) comprend au moins un composant électriquement conducteur pour la perturbation électromagnétique du champ électromagnétique induit dans la ou les bobines secondaires (509).

13. Dispositif d'entraînement (501) selon la revendication 11 ou 12, **caractérisé en ce qu'**au moins deux bobines d'excitation (903, 905) sont prévues, qui sont adjacentes et se chevauchent au moins en partie.

14. Dispositif d'entraînement (501) selon l'une quelconque des revendications 11 à 13, **caractérisé en ce qu'**un moteur linéaire (605) pour le déplacement de l'élément mobile (503) est prévu.
